# EUROPEAN PATENT APPLICATION

(11) **EP 3 978 954 A1**
(43) Date of publication of application: **06.04.2022**
(21) Application number: 20812590.6
(22) Date of filing: 12.05.2020
(51) Int. Cl.: G01S 13/931, G01S 13/58, G08G 1/16

(54) **ELECTRONIC DEVICE, ELECTRONIC DEVICE CONTROL METHOD, AND PROGRAM**

(30) Priority: 29.05.2019 JP 2019100702
(71) Applicant: Kyocera Corporation, Kyoto-shi, Kyoto 612-8501 (JP)
(72) Inventor: SAHARA, Tooru, Kyoto-shi, Kyoto 612-8501 (JP); KAWAJI, Satoshi, Kyoto-shi, Kyoto 612-8501 (JP); MURAKAMI, Youhei, Kyoto-shi, Kyoto 612-8501 (JP); SATO, Masayuki, Kyoto-shi, Kyoto 612-8501 (JP); HOMMA, Takuya, Kyoto-shi, Kyoto 612-8501 (JP); NISHIKIDO, Masamitsu, Kyoto-shi, Kyoto 612-8501 (JP)
(74) Representative: Viering, Jentschura & Partner mbB Patent- und Rechtsanwälte
(86) International application number: PCT/JP2020/018947
(87) International publication number: WO 2020/241235

(57) **Abstract**

An electronic device includes a transmission antenna that transmits a transmission wave, a reception antenna that receives a reflected wave that is the transmission wave having been reflected, and a control unit. The control unit detects an object that reflects the transmission wave, based on a transmission signal transmitted as the transmission wave and a reception signal received as the reflected wave. The control unit estimates a time taken by the object to arrive at the mobility device, based on the transmission signal and the reception signal, and notifies a mobility device control unit that controls the mobility device of detection of the object in accordance with the time.

## Description

### Cross-Reference To Related Applications

This application claims priority from Japanese Patent Application No. 2019-100702 filed in Japan on May 29, 2019, the entire disclosure of which is incorporated herein by reference.

### Technical Field

The present disclosure relates to an electronic device, a method for controlling an electronic device, and a program.

### Background Art

For example, in fields such as automobile-related industries, a technology for measuring a distance or the like between a vehicle of interest and a predetermined object is regarded as important. Recently, various studies have been conducted particularly on a radar (Radio Detecting and Ranging) technology for measuring a distance or the like to an object such as an obstacle by transmitting a radio wave such as a millimeter wave and receiving a reflected wave reflected off the object. Such a technology for measuring a distance or the like expectedly becomes more important in the future with progresses of a technology for assisting drivers in driving and a technology related to automated driving for partially or entirely automating driving.

Various suggestions have been made in relation to a technology for detecting the presence of a predetermined object by receiving a reflected wave of a radio wave that has been transmitted and reflected off the object. For example, PTL 1 discloses an FM-CW radar device. The FM-CW radar device performs linear frequency modulation (FM) on a transmission signal at a particular period, and radiates the transmission signal toward a target object. The FM-CW radar device then detects a beat signal on the basis of a difference between the transmission signal and a reception signal from the target object, and measures a distance and/or a velocity through frequency analysis of this signal.

### Citation List

### Patent Literature

PTL 1: Japanese Unexamined Patent Application Publication No. 11-133144

### Summary of Invention

An electronic device according to one embodiment is an electronic device, to be mounted in a mobility device, that includes a transmission antenna that transmits a transmission wave, a reception antenna that receives a reflected wave that is the transmission wave having been reflected, and a control unit.

The control unit detects an object that reflects the transmission wave, based on a transmission signal transmitted as the transmission wave and a reception signal received as the reflected wave.

The control unit estimates a time taken by the object to arrive at the mobility device, based on the transmission signal and the reception signal, and notifies a mobility device control unit that controls the mobility device of detection of the object in accordance with the time.

A method for controlling an electronic device according to one embodiment is a method for controlling an electronic device to be mounted in a mobility device, that includes steps as follows:
(1) a step of transmitting a transmission wave from a transmission antenna;
(2) a step of receiving, from a reception antenna, a reflected wave that is the transmission wave having been reflected;
(3) a step of detecting an object that reflects the transmission wave, based on a transmission signal transmitted as the transmission wave and a reception signal received as the reflected wave;
(4) a step of estimating a time taken by the object to arrive at the mobility device, based on the transmission signal and the reception signal; and
(5) a step of notifying a mobility device control unit that controls the mobility device of detection of the object in accordance with the time.

A program according to one embodiment causes an electronic device to be mounted in a mobility device to perform the steps (1) to (5) above.

### Brief Description of Drawings

[Fig. 1] Fig. 1 is a diagram for describing how an electronic device according to one embodiment is used.
[Fig. 2] Fig. 2 is a functional block diagram schematically illustrating a configuration of the electronic device according to the one embodiment.
[Fig. 3] Fig. 3 is a diagram for describing a configuration of a transmission signal according to the one embodiment.
[Fig. 4] Fig. 4 is a flowchart for describing an example of an operation of the electronic device according to the one embodiment.
[Fig. 5] Fig. 5 is a flowchart for describing another example of the operation of the electronic device according to the one embodiment.
[Fig. 6] Fig. 6 is a flowchart for describing another example of the operation of the electronic device according to the one embodiment.

### Description of Embodiments

The safety of a mobility device such as an automobile, for example, is desirably improved by using a technology for detecting a predetermined object by receiving a reflected wave of a transmission wave that has been transmitted and reflected off the object. An object of the present disclosure is to provide an electronic device, a method for controlling an electronic device, and a program that can improve the safety of a mobility device. According to one embodiment, an electronic device, a method for controlling an electronic device, and a program that can improve the safety of a mobility device can be provided. One embodiment is described in detail below with reference to the drawings.

An electronic device according to one embodiment is mounted in a vehicle (mobility device) such as an automobile, for example, and thus is capable of detecting a predetermined object located around the mobility device. To this end, the electronic device according to the one embodiment is capable of transmitting a transmission wave to an area around the mobility device from a transmission antenna installed on the mobility device. The electronic device according to the one embodiment is also capable of receiving a reflected wave that is the transmission wave having been reflected, from a reception antenna installed on the mobility device. At least one of the transmission antenna and the reception antenna may be included in a radar sensor or the like installed on the mobility device, for example.

A configuration in which the electronic device according to the one embodiment is mounted in an automobile such as a passenger car is described below as a typical example. However, the mobility device in which the electronic device according to the one embodiment is mounted is not limited to an automobile. The electronic device according to the one embodiment may be mounted in various mobility devices such as a bus, a truck, a motorcycle, a bicycle, a ship, an aircraft, a farm vehicle such as a tractor, a snowplow, a garbage truck, a police car, an ambulance, and a drone. The mobility device in which the electronic device according to the one embodiment is mounted is not necessarily limited to a mobility device that moves by its own motive power. For example, the mobility device in which the electronic device according to the one embodiment is mounted may be a trailer towed by a tractor. The electronic device according to the one embodiment is capable of measuring a distance or the like between a sensor and a predetermined object when at least one of the sensor and the object is movable. The electronic device according to the one embodiment is also capable of measuring the distance or the like between the sensor and the object even when both the sensor and the object are stationary.

An example of how the electronic device according to the one embodiment detects an object is described first.

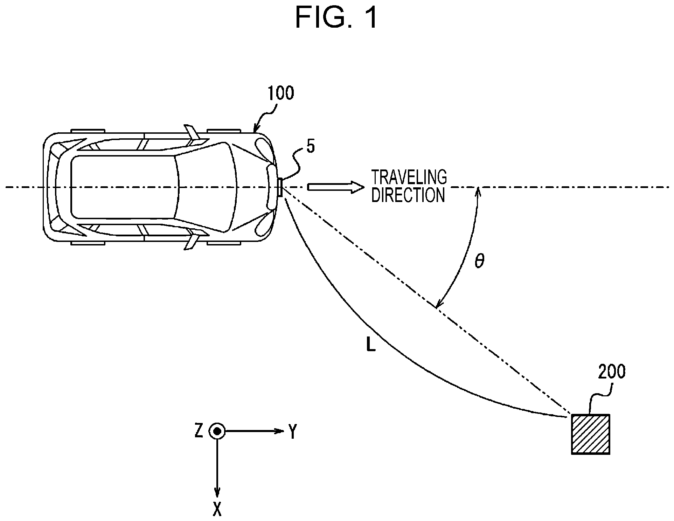

Fig. 1 is a diagram for describing how the electronic device according to the one embodiment is used. Fig. 1 illustrates an example in which a sensor including a transmission antenna and a reception antenna according to the one embodiment is installed on a mobility device.

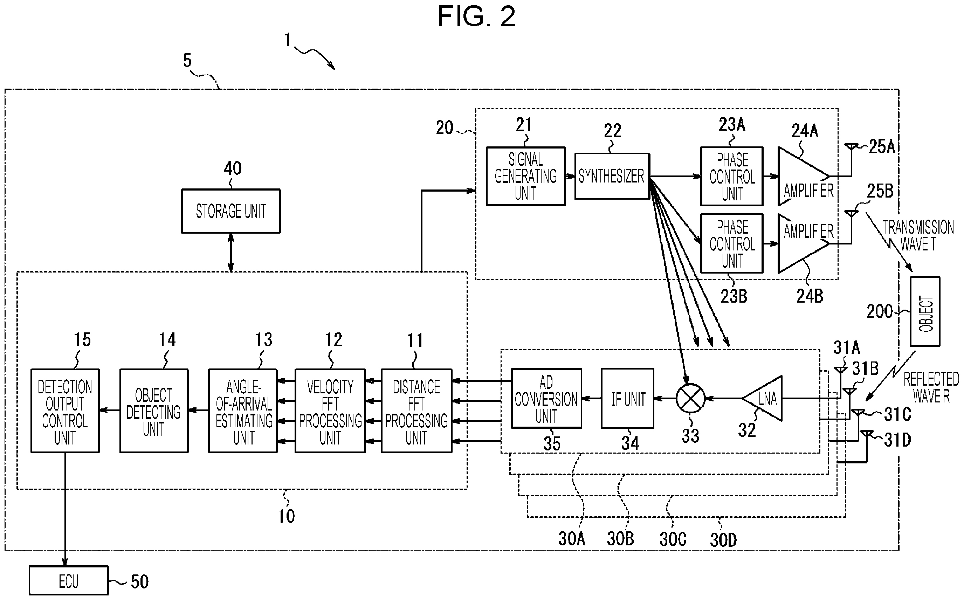

A sensor 5 including a transmission antenna and a reception antenna according to the one embodiment is installed on a mobility device 100 illustrated in Fig. 1. It is assumed that an electronic device 1 according to the one embodiment is also mounted (for example, built) in the mobility device 100 illustrated in Fig. 1. A specific configuration of the electronic device 1 is described later. The sensor 5 may include at least one of the transmission antenna and the reception antenna, for example. The sensor 5 may also appropriately include at least any of other functional units, such as at least part of a control unit 10 (Fig. 2) included in the electronic device 1. The mobility device 100 illustrated in Fig. 1 may be an automotive vehicle such as a passenger car but may be a mobility device of any type. In Fig. 1, the mobility device 100 may move (travel or slowly travel), for example, in a positive Y-axis direction (traveling direction) illustrated in Fig. 1 or in another direction, or may be stationary without moving.

As illustrated in Fig. 1, the sensor 5 including the transmission antenna is installed on the mobility device 100. In the example illustrated in Fig. 1, only one sensor 5 including the transmission antenna and the reception antenna is installed at a front portion of the mobility device 100. The position where the sensor 5 is installed on the mobility device 100 is not limited to the position illustrated in Fig. 1 and may be another appropriate position. For example, the sensor 5 illustrated in Fig. 1 may be installed on a left side, on a right side, and/or at a rear portion of the mobility device 100. The number of such sensors 5 may be any number equal to or greater than 1 depending on various conditions (or requirements) such as a range and/or an accuracy of measurement performed by the mobility device 100. The sensor 5 may be installed inside the mobility device 100. The inside the mobility device 100 may be, for example, a space inside a bumper, a space inside a body, a space inside a headlight, or a space such as a driver's space.

The sensor 5 transmits an electromagnetic wave as a transmission wave from the transmission antenna. For example, when a predetermined object (for example, an object 200 illustrated in Fig. 1) is located around the mobility device 100, at least part of the transmission wave transmitted from the sensor 5 is reflected off the object to become a reflected wave. For example, the reception antenna of the sensor 5 receives such a reflected wave. In this manner, the electronic device 1 mounted in the mobility device 100 can detect the object.

The sensor 5 including the transmission antenna may be typically a radar (Radio Detecting and Ranging) sensor that transmits and receives a radio wave. However, the sensor 5 is not limited to a radar sensor. The sensor 5 according to the one embodiment may be, for example, a sensor based on the LIDAR (Light Detection and Ranging, Laser Imaging Detection and Ranging) technology that uses an optical wave. Each of these sensors can include, for example, a patch antenna. Since the technologies such as RADAR and LIDAR are already known, detailed description may be appropriately simplified or omitted.

The electronic device 1 mounted in the mobility device 100 illustrated in Fig. 1 receives, from the reception antenna, the reflected wave of the transmission wave transmitted from the transmission antenna of the sensor 5. In this manner, the electronic device 1 can detect the predetermined object 200 located within a predetermined distance from the mobility device 100. For example, as illustrated in Fig. 1, the electronic device 1 can measure a distance L between the mobility device 100, which is a vehicle of interest, and the predetermined object 200. The electronic device 1 can also measure a relative velocity between the mobility device 100, which is the vehicle of interest, and the predetermined object 200. The electronic device 1 can further measure a direction (an angle of arrival θ) from which the reflected wave from the predetermined object 200 arrives at the mobility device 100, which is the vehicle of interest.

The object 200 may be, for example, at least any of an oncoming automobile traveling in a lane adjacent to a lane of the mobility device 100, an automobile traveling side by side with the mobility device 100, an automobile traveling in front of or behind the mobility device 100 in the same lane, and the like. The object 200 may also be any object located around the mobility device 100, such as a motorcycle, a bicycle, a stroller, a person such as a pedestrian, an animal, an insect, other forms of life, a guardrail, a median strip, a road sign, a step on a sidewalk, a wall, a manhole, or an obstacle. The object 200 may be in motion or stationary. For example, the object 200 may be an automobile or the like that is parked or stationary around the mobility device 100.

In Fig. 1, a ratio between a size of the sensor 5 and a size of the mobility device 100 does not necessarily indicate an actual ratio. Fig. 1 illustrates the sensor 5 that is installed on an outer portion of the mobility device 100. However, in the one embodiment, the sensor 5 may be installed at various positions of the mobility device 100. For example, in one embodiment, the sensor 5 may be installed inside a bumper of the mobility device 100 so as not to be seen in the appearance of the mobility device 100.

Description is given below on the assumption that the transmission antenna of the sensor 5 transmits a radio wave in a frequency band, such as a millimeter wave (equal to or higher than 30 GHz) or a quasi-millimeter wave (for example, around 20 GHz to 30 GHz) as a typical example. For example, the transmission antenna of the sensor 5 may transmit a radio wave having a frequency bandwidth of 4 GHz such as from 77 GHz to 81 GHz.

Fig. 2 is a functional block diagram schematically illustrating an example of a configuration of the electronic device 1 according to the one embodiment. An example of the configuration of the electronic device 1 according to the one embodiment is described below.

When a distance or the like is measured by using a millimeter-wave radar, a frequency-modulated continuous wave radar (hereinafter, referred to as an FMCW radar) is often used. The FMCW radar sweeps a frequency of a to-be-transmitted radio wave to generate a transmission signal. Thus, a frequency of the radio wave used by such a millimeter-wave FMCW radar, which uses a radio wave of a frequency band of 79 GHz, for example, has a frequency bandwidth of 4 GHz such as from 77 GHz to 81 GHz, for example. The radar of the frequency bandwidth of 79 GHz has a characteristic that the usable frequency bandwidth is wider than another millimeter-wave and/or quasi-millimeter-wave radar of a frequency band of 24 GHz, 60 GHz, or 76 GHz, for example. Such an embodiment is described below as an example.

As illustrated in Fig. 2, the electronic device 1 according to the one embodiment is constituted by the sensor 5 and an ECU (Electronic Control Unit) 50. The ECU 50 controls various operations of the mobility device 100. The ECU 50 may serve as a mobility device control unit that controls the mobility device 100. That is, the ECU 50 may be one specific example of the mobility device control unit according to the one embodiment. Hereinafter, the ECU 50 is also referred to as a mobility device control unit 50. The ECU 50 may be constituted by at least one or more ECUs. The electronic device 1 according to the one embodiment includes the control unit 10. The electronic device 1 according to the one embodiment may also appropriately include another functional unit such as at least any of a transmission unit 20, reception units 30A to 30D, and a storage unit 40. As illustrated in Fig. 2, the electronic device 1 may include a plurality of reception units such as the reception units 30A to 30D. When the reception units 30A, 30B, 30C, and 30D are not distinguished from one another, the reception units 30A, 30B, 30C, and 30D are simply referred to as "reception units 30" below.

The control unit 10 may include a distance FFT processing unit 11, a velocity FFT processing unit 12, an angle-of-arrival estimating unit 13, an object detecting unit 14, and a detection output control unit 15. These functional units included in the control unit 10 are further described later.

As illustrated in Fig. 2, the transmission unit 20 may include a signal generating unit 21, a synthesizer 22, phase control units 23A and 23B, amplifiers 24A and 24B, and transmission antennas 25A and 25B. When the phase control units 23A and 23B are not distinguished from each other, the phase control units 23A and 23B are simply referred to as "phase control units 23" below. When the amplifiers 24A and 24B are not distinguished from each other, the amplifiers 24A and 24B are simply referred to as "amplifiers 24" below. When the transmission antennas 25A and 25B are not distinguished from each other, the transmission antennas 25A and 25B are simply referred to as "transmission antennas 25" below.

As illustrated in Fig. 2, each of the reception units 30 may include a respective one of reception antennas 31A to 31D. When the reception antennas 31A, 31B, 31C, and 31D are not distinguished from one another, the reception antennas 31A, 31B, 31C, and 31D are simply referred to as "reception antennas 31" below. As illustrated in Fig. 2, each of the plurality of reception units 30 may include an LNA 32, a mixer 33, an IF unit 34, and an AD conversion unit 35. The reception units 30A to 30D may have the same and/or similar configuration. Fig. 2 schematically illustrates the configuration of only the reception unit 30A as a representative example.

The sensor 5 described above may include, for example, the transmission antennas 25 and the reception antennas 31. The sensor 5 may also appropriately include at least any of other functional units such as the control unit 10.

The control unit 10 included in the electronic device 1 according to the one embodiment is capable of controlling the individual functional units of the electronic device 1 and also controlling operations of the entire electronic device 1. To provide control and processing capabilities for executing various functions, the control unit 10 may include at least one processor, for example, a CPU (Central Processing Unit). The control unit 10 may be collectively implemented by one processor, may be implemented by some processors, or may be implemented by discrete individual processors. The processor may be implemented as one integrated circuit. The integrated circuit is also referred to as an IC. The processor may be implemented as a plurality of integrated circuits and discrete circuits connected to be able to perform communication. The processor may be implemented on the basis of various other known technologies. In the one embodiment, the control unit 10 may be configured as, for example, a CPU and a program executed by the CPU. The control unit 10 may appropriately include a memory required for operations of the control unit 10.

The storage unit 40 may store a program executed in the control unit 10, results of processing performed by the control unit 10, etc. The storage unit 40 may function as a work memory of the control unit 10. The storage unit 40 may be constituted, for example, by a semiconductor memory or a magnetic disk. However, the storage unit 40 is not limited to these, and can be any storage device. The storage unit 40 may be, for example, a storage medium such as a memory card inserted to the electronic device 1 according to the present embodiment. The storage unit 40 may be an internal memory of the CPU used as the control unit 10 as described above.

In the one embodiment, the storage unit 40 may store various parameters for setting a range in which an object is to be detected on the basis of a transmission wave T transmitted from each transmission antenna 25 and a reflected wave R received from each reception antenna 31.

In the electronic device 1 according to the one embodiment, the control unit 10 is capable of controlling at least one of the transmission unit 20 and the reception units 30. In this case, the control unit 10 may control at least one of the transmission unit 20 and the reception units 30 on the basis of various kinds of information stored in the storage unit 40. In the electronic device 1 according to the one embodiment, the control unit 10 may instruct the signal generating unit 21 to generate a signal or may control the signal generating unit 21 to generate a signal.

In accordance with control performed by the control unit 10, the signal generating unit 21 generates a signal (transmission signal) to be transmitted as the transmission wave T from each of the transmission antennas 25. When generating the transmission signal, the signal generating unit 21 may allocate a frequency of the transmission signal in accordance with control performed by the control unit 10, for example. Specifically, the signal generating unit 21 may allocate a frequency of the transmission signal in accordance with a parameter set by. For example, the signal generating unit 21 receives frequency information from the control unit 10 or the storage unit 40 and generates a signal having a predetermined frequency in a frequency band such as from 77 GHz to 81 GHz, for example. The signal generating unit 21 may include a functional unit serving as a voltage control oscillator (VCO), for example.

The signal generating unit 21 may be configured as hardware having the function, as for example a microcomputer, or as for example a processor such as a CPU and a program or the like executed by the processor. Each functional unit described below may also be configured as hardware having the function, as for example a microcomputer if possible, or as for example a processor such as a CPU or a program or the like executed by the processor.

In the electronic device 1 according to the one embodiment, the signal generating unit 21 may generate a transmission signal (transmission chirp signal) such as a chirp signal, for example. In particular, the signal generating unit 21 may generate a signal (linear chirp signal) whose frequency changes linearly and periodically. For example, the signal generating unit 21 may generate a chirp signal whose frequency linearly and periodically increases from 77 GHz to 81 GHz as time elapses. For example, the signal generating unit 21 may generate a signal whose frequency periodically repeats a linear increase (up-chirp) from 77 GHz to 81 GHz and a decrease (down-chirp) as time elapses. The signal to be generated by the signal generating unit 21 may be set in advance by the control unit 10, for example. The signal generated by the signal generating unit 21 may be stored in advance in the storage unit 40 or the like, for example. Since chirp signals used in a technical field such as a radar are known, more detailed description is appropriately simplified or omitted. The signal generated by the signal generating unit 21 is supplied to the synthesizer 22.

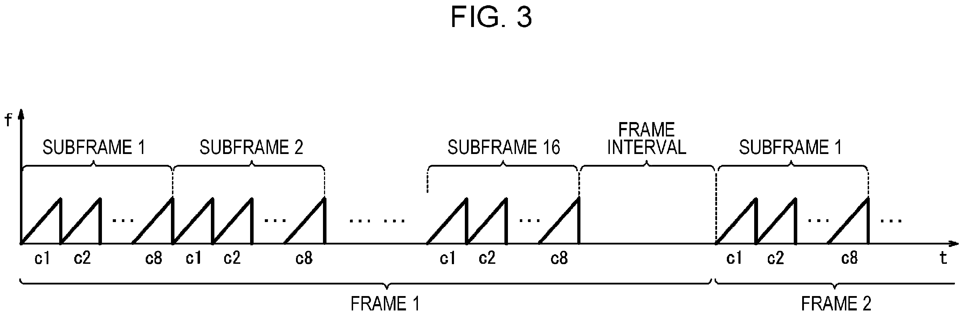

Fig. 3 is a diagram for describing an example of chirp signals generated by the signal generating unit 21.

In Fig. 3, the horizontal axis represents an elapse of time, and the vertical axis represents a frequency. In the example illustrated in Fig. 3, the signal generating unit 21 generates linear chirp signals whose frequency linearly changes periodically. In Fig. 3, the individual chirp signals are denoted by c1, c2, ..., c8. As illustrated in Fig. 3, the frequency of each chirp signal linearly increases as time elapses.

In the example illustrated in Fig. 3, eight chirp signals c1, c2, ..., c8 constitute one subframe. That is, each of subframes such as a subframe 1 and a subframe 2 illustrated in Fig. 3 includes eight chirp signals c1, c2, ..., c8. In the example illustrated in Fig. 3, 16 subframes such as the subframes 1 to 16 constitute one frame. That is, each of frames such as a frame 1 and a frame 2 illustrated in Fig. 3 includes 16 subframes. As illustrated in Fig. 3, a frame interval of a predetermined length may be included between frames. One frame illustrated in Fig. 3 may have a length of about 30 ms to 50 ms, for example.

In Fig. 3, the frame 2 and subsequent frames may have the same and/or similar configuration. In Fig. 3, the frame 3 and subsequent frames may have the same and/or similar configuration. In the electronic device 1 according to the one embodiment, the signal generating unit 21 may generate a transmission signal as any number of frames. In Fig. 3, an illustration of some chirp signals is omitted. As described above, a relationship between time and a frequency of the transmission signal generated by the signal generating unit 21 may be stored in the storage unit 40 or the like, for example.

As described above, the electronic device 1 according to the one embodiment may transmit a transmission signal constituted by subframes each including a plurality of chirp signals. The electronic device 1 according to the one embodiment may transmit a transmission signal constituted by frames each including a predetermined number of subframes.

Description is given below on the assumption that the electronic device 1 transmits a transmission signal having a frame structure illustrated in Fig. 3. However, the frame structure illustrated in Fig. 3 is an example. For example, the number of chirp signals included in one subframe is not limited to eight. In the one embodiment, the signal generating unit 21 may generate a subframe including any number (for example, a plurality) of chirp signals. A subframe structure illustrated in Fig. 3 is also an example. For example, the number of subframes included in one frame is not limited to 16. In the one embodiment, the signal generating unit 21 may generate a frame including any number (for example, a plurality) of subframes. The signal generating unit 21 may generate signals having different frequencies. The signal generating unit 21 may generate a plurality of discrete signals of bandwidths in which frequencies f are different from each other.

Referring back to Fig. 2, the synthesizer 22 increases the frequency of the signal generated by the signal generating unit 21 to a frequency in a predetermined frequency band. The synthesizer 22 may increase the frequency of the signal generated by the signal generating unit 21 to a frequency selected as a frequency of the transmission wave T to be transmitted from each of the transmission antennas 25. The frequency selected as the frequency of the transmission wave T to be transmitted from each of the transmission antennas 25 may be set by the control unit 10, for example. For example, the frequency selected as the frequency of the transmission wave T to be transmitted from each of the transmission antennas 25 may be a frequency selected by the control unit 10. The frequency selected as the frequency of the transmission wave T to be transmitted from each of the transmission antennas 25 may be stored in the storage unit 40, for example. The signal whose frequency has been increased by the synthesizer 22 is supplied to the phase control unit 23 and the mixer 33. When the plurality of phase control units 23 are present, the signal whose frequency has been increased by the synthesizer 22 may be supplied to each of the plurality of phase control units 23. When the plurality of reception units 30 are present, the signal whose frequency has been increased by the synthesizer 22 may be supplied to each of the mixers 33 of the plurality of reception units 30.

Each of the phase control units 23 controls a phase of the transmission signal supplied from the synthesizer 22. Specifically, for example, in accordance with control performed by the control unit 10, each of the phase control units 23 may appropriately advance or delay the phase of the signal supplied from the synthesizer 22 to adjust the phase of the transmission signal. In this case, on the basis of a difference between paths of the transmission waves T to be transmitted from the plurality of transmission antennas 25, the phase control units 23 may adjust the phases of the respective transmission signals. The phase control units 23 appropriately adjust the phases of the respective transmission signals. Consequently, the transmission waves T transmitted from the plurality of transmission antennas 25 enhance with each other in a predetermined direction to form a beam (beamforming). In this case, a correlation between a direction of beamforming and amounts of phase by which the respective transmission signals transmitted by the plurality of transmission antennas 25 are controlled may be stored in the storage unit 40, for example. The transmission signal whose phase is controlled by each of the phase control units 23 is supplied to a respective one of the amplifiers 24.

The amplifier 24 amplifies power (electric power) of the transmission signal supplied from the phase control unit 23 in accordance with control performed by the control unit 10, for example. When the sensor 5 includes the plurality of transmission antennas 25, each of the plurality of amplifiers 24 may amplify power (electric power) of the transmission signal supplied from a respective one of the plurality of phase control units 23 in accordance with control performed by the control unit 10, for example. Since the technology for amplifying power of a transmission signal is already known, more detailed description is omitted. Each of the amplifiers 24 is connected to a respective one of the transmission antennas 25.

The transmission antenna 25 outputs (transmits), as the transmission wave T, the transmission signal amplified by the amplifier 24. When the sensor 5 includes the plurality of transmission antennas 25, each of the plurality of transmission antennas 25 may output (transmit), as the transmission wave T, the transmission signal amplified by a respective one of the plurality of amplifiers 24. Since the transmission antennas 25 can be configured in a manner that is the same as and/or similar to that of transmission antennas for use in the known radar technology, more detailed description is omitted.

The electronic device 1 according to the one embodiment, which includes the transmission antennas 25, is capable of transmitting transmission signals (for example, transmission chirp signals) as the transmission waves T from the respective transmission antennas 25 in this manner. At least one of the functional units constituting the electronic device 1 may be housed in one housing. In this case, the one housing may have a hard-to-open structure. For example, the transmission antennas 25, the reception antennas 31, and the amplifiers 24 are desirably housed in one housing, and this housing desirably has a hard-to-open structure. When the sensor 5 is installed on the mobility device 100 such as an automobile, each of the transmission antennas 25 may transmit the transmission wave T to outside the mobility device 100 through a cover member such as a radar cover, for example. In this case, the radar cover may be made of a material, for example, a synthetic resin or rubber, that allows electromagnetic waves to pass therethrough. This radar cover may also serve as a housing of the sensor 5, for example. The transmission antennas 25 are covered with a member such as the radar cover, so that a risk of the transmission antennas 25 being damaged or malfunctioning because of a contact with an external object can be reduced. The radar cover and the housing may also be referred to as a radome.

Fig. 2 illustrates an example in which the electronic device 1 includes two transmission antennas 25. However, in the one embodiment, the electronic device 1 may include any number of transmission antennas 25. On the other hand, in the one embodiment, the electronic device 1 may include the plurality of transmission antennas 25 in the case where the transmission waves T transmitted from the respective transmission antennas 25 form a beam in a predetermined direction. In the one embodiment, the electronic device 1 may include a plurality of transmission antennas 25. In this case, the electronic device 1 may include the plurality of phase control units 23 and the plurality of amplifiers 24 to correspond to the plurality of transmission antennas 25. Each of the plurality of phase control units 23 may control the phase of a respective one of the plurality of transmission waves supplied from the synthesizer 22 and to be transmitted from the plurality of transmission antennas 25. Each of the plurality of amplifiers 24 may amplify power of a respective one of the plurality of transmission signals to be transmitted from the plurality of transmission antennas 25. In this case, the sensor 5 may include the plurality of transmission antennas. As described above, when the electronic device 1 illustrated Fig. 2 includes the plurality of transmission antennas 25, the electronic device 1 may include a plurality of functional units necessary for transmitting the transmission waves T from the plurality of transmission antennas 25.

The reception antenna 31 receives the reflected wave R. The reflected wave R is the transmission wave T reflected off the predetermined object 200. As the reception antenna 31, a plurality of antennas such as the reception antennas 31A to 31D, for example, may be included. Since the reception antennas 31 can be configured in a manner that is the same as and/or similar to that of reception antennas for use in the known radar technology, more detailed description is omitted. Each of the reception antennas 31 is connected to the LNA 32. A reception signal based on the reflected wave R received by each of the reception antennas 31 is supplied to the LNA 32.

The electronic device 1 according to the one embodiment can receive, from each of the plurality of reception antennas 31, the reflected wave R that is the transmission wave T that has been transmitted as the transmission signal (transmission chirp signal) such as a chirp signal, for example, and has been reflected off the predetermined object 200. When the transmission chirp signal is transmitted as the transmission wave T in this manner, the reception signal based on the received reflected wave R is referred to as a reception chirp signal. That is, the electronic device 1 receives the reception signal (for example, the reception chirp signal) as the reflected wave R from each of the reception antennas 31. When the sensor 5 is installed on the mobility device 100 such as an automobile, each of the reception antennas 31 may receive the reflected wave R from outside the mobility device 100 through a cover member such as a radar cover, for example. In this case, the radar cover may be made of a material, for example, a synthetic resin or rubber, that allows electromagnetic waves to pass therethrough. This radar cover may also serve as a housing of the sensor 5, for example. The reception antennas 31 are covered with a member such as the radar cover, so that a risk of the reception antennas 31 being damaged or malfunctioning because of a contact with an external object can be reduced. The radar cover and the housing may also be referred to as a radome.

When the reception antennas 31 are installed near the transmission antennas 25, these may be collectively included in one sensor 5. That is, for example, one sensor 5 may include at least one transmission antenna 25 and at least one reception antenna 31. For example, one sensor 5 may include the plurality of transmission antennas 25 and the plurality of reception antennas 31. In such a case, one radar sensor may be covered with a cover member such as one radar cover, for example.

The LNA 32 amplifies, with low noise, the reception signal based on the reflected wave R received by a respective one of the reception antennas 31. The LNA 32 may be a low-noise amplifier and amplifies, with low noise, the reception signal supplied from a respective one of the reception antennas 31. The reception signal amplified by the LNA 32 is supplied to the mixer 33.

The mixer 33 mixes (multiplies) the reception signal having a radio frequency (RF) supplied from the LNA 32 and the transmission signal supplied from the synthesizer 22 to generate a beat signal. The beat signal obtained by the mixer 33 through mixing is supplied to the IF unit 34.

The IF unit 34 performs frequency conversion on the beat signal supplied from the mixer 33 to reduce the frequency of the beat signal to an intermediate frequency (IF). The beat signal whose frequency has been reduced by the IF unit 34 is supplied to the AD conversion unit 35.

The AD conversion unit 35 digitizes the analog beat signal supplied from the IF unit 34. The AD conversion unit 35 may be constituted by any analog-to-digital conversion circuit (Analog to Digital Converter (ADC)). The digitized beat signal obtained by the AD conversion unit 35 is supplied to the distance FFT processing unit 11 of the control unit 10. In the case where there are the plurality of reception units 30, the beat signals each digitized by a respective one of the plurality of AD conversion units 35 may be supplied to the distance FFT processing unit 11.

The distance FFT processing unit 11 estimates a distance between the mobility device 100 equipped with the electronic device 1 and the object 200 on the basis of the beat signals supplied from the respective AD conversion units 35. The distance FFT processing unit 11 may include a processing unit that performs fast Fourier transform, for example. In this case, the distance FFT processing unit 11 may be configured as any circuit, any chip, or the like that performs fast Fourier transform (FFT) processing.

The distance FFT processing unit 11 performs FFT processing (hereinafter, appropriately referred to as "distance FFT processing") on the beat signal that has been digitized by each of the AD conversion units 35. For example, the distance FFT processing unit 11 may perform the FFT processing on a complex signal supplied from each of the AD conversion units 35. The beat signal that has been digitized by each of the AD conversion units 35 can be represented as a temporal change in signal intensity (power). The distance FFT processing unit 11 performs FFT processing on such a beat signal, so that the beat signal can be represented as a signal intensity (power) for each frequency. If a peak in a result obtained by the distance FFT processing is equal to or greater than a predetermined threshold, the distance FFT processing unit 11 may determine that the predetermined object 200 is located at the distance corresponding to the peak. For example, there is known a method for determining that an object (reflecting object) that reflects a transmission wave is present when a peak value that is equal to or greater than a threshold is detected from the average power or amplitude of a disturbance signal as in constant false alarm rate (CFAR)-based detection processing.

As described above, the electronic device 1 according to the one embodiment can detect the object 200 that reflects the transmission wave T on the basis of the transmission signal transmitted as the transmission wave T and the reception signal received as the reflected wave R.

The distance FFT processing unit 11 can estimate a distance to the predetermined object on the basis of one chirp signal (for example, c1 illustrated in Fig. 3). That is, the electronic device 1 can measure (estimate) the distance L illustrated in Fig. 1 by performing the distance FFT processing. Since a technique for measuring (estimating) a distance to a predetermined object by performing FFT processing on a beat signal is known, more detailed description is appropriately simplified or omitted. Results (for example, distance information) of the distance FFT processing performed by the distance FFT processing unit 11 may be supplied to the velocity FFT processing unit 12. The results of the distance FFT processing performed by the distance FFT processing unit 11 may also be supplied to the object detecting unit 14.

The velocity FFT processing unit 12 estimates a relative velocity between the mobility device 100 equipped with the electronic device 1 and the object 200 on the basis of the beat signals on which the distance FFT processing has been performed by the distance FFT processing unit 11. The velocity FFT processing unit 12 may include a processing unit that performs fast Fourier transform, for example. In this case, the velocity FFT processing unit 12 may be configured as any circuit, any chip, or the like that performs fast Fourier transform (FFT) processing.

The velocity FFT processing unit 12 further performs FFT processing (hereinafter, appropriately referred to as "velocity FFT processing") on each beat signal on which the distance FFT processing has been performed by the distance FFT processing unit 11. For example, the velocity FFT processing unit 12 may perform the FFT processing on each complex signal supplied from the distance FFT processing unit 11. The velocity FFT processing unit 12 can estimate a relative velocity to the predetermined object on the basis of a subframe (for example, the subframe 1 illustrated in Fig. 3) including chirp signals. When the distance FFT processing is performed on the beat signal in the above-described manner, a plurality of vectors can be generated. The velocity FFT processing unit 13 can estimate a relative velocity to the predetermined object by determining a phase of a peak in a result of the velocity FFT processing performed on the plurality of vectors. That is, the electronic device 1 can measure (estimate) a relative velocity between the mobility device 100 and the predetermined object 200 illustrated in Fig. 1 by performing the velocity FFT processing. Since a technique for measuring (estimating) a relative velocity to a predetermined object by performing velocity FFT processing on a result of distance FFT processing is known, more detailed description is appropriately simplified or omitted. Results (for example, velocity information) of the velocity FFT processing performed by the velocity FFT processing unit 12 may be supplied to the angle-of-arrival estimating unit 13. The results of the velocity FFT processing performed by the velocity FFT processing unit 12 may also be supplied to the object detecting unit 14.

The angle-of-arrival estimating unit 13 estimates a direction from which the reflected wave R arrives from the predetermined object 200 on the basis of the results of the velocity FFT processing performed by the velocity FFT processing unit 12. The electronic device 1 can estimate the direction from which the reflected wave R arrives by receiving the reflected wave R from the plurality of reception antennas 31. For example, the plurality of reception antennas 31 are arranged at a predetermined interval. In this case, the transmission wave T transmitted from each of the transmission antennas 25 is reflected off the predetermined object 200 to become the reflected wave R. Each of the plurality of reception antennas 31 arranged at the predetermined interval receives the reflected wave R. The angle-of-arrival estimating unit 13 can estimate the direction from which the reflected wave R arrives at each of the plurality of reception antennas 31 on the basis of the phase of the reflected wave R received by the reception antenna 31 and a difference in path of the reflected wave R. That is, the electronic device 1 can measure (estimate) the angle of arrival θ illustrated in Fig. 1 on the basis of the results of the velocity FFT processing.

Various techniques for estimating a direction from which the reflected wave R arrives on the basis of a result of velocity FFT processing have been proposed. For example, MUSIC (MUltiple SIgnal Classification), ESPRIT (Estimation of Signal Parameters via Rotational Invariance Technique), and the like are known as known arriving direction estimation algorithms. Thus, more detailed description of the known techniques is appropriately simplified or omitted. Information (angle information) of the angle of arrival θ estimated by the angle-of-arrival estimating unit 13 may be supplied to the object detecting unit 14.

The object detecting unit 14 detects an object located in a range in which the transmission waves T are transmitted, on the basis of the information supplied from at least any of the distance FFT processing unit 11, the velocity FFT processing unit 12, and the angle-of-arrival estimating unit 13. The object detecting unit 14 may perform detection of an object by performing, for example, clustering processing on the basis of the supplied distance information, velocity information, and angle information. For example, DBSCAN (Density-based spatial clustering of applications with noise) or the like is known as an algorithm used in clustering of data. In the clustering processing, for example, average power of points constituting the detected object may be calculated. The distance information, the velocity information, the angle information, and power information of the object detected by the object detecting unit 14 may be supplied to the detection output control unit 15. The distance information, the velocity information, the angle information, and the power information of the object detected by the object detecting unit 14 may be supplied to the ECU 50. In this case, when the mobility device 100 is an automobile, communication may be performed using a communication interface such as a CAN (control unit Area Network), for example.

The detection output control unit 15 performs control when the ECU 50 is notified of detection by the object detecting unit 14. More specifically, the detection output control unit 15 performs control when information detected by the object detecting unit 14 is output to the ECU 50. For example, the detection output control unit 15 may control whether to output the information detected by the object detecting unit 14 to the ECU 50. Specifically, the detection output control unit 15 may cause, in accordance with information on an object detected by the object detecting unit 14, the information on the object to be or not to be output to the ECU 50. The detection output control unit 15 may control an output order when the information detected by the object detecting unit 14 is output to the ECU 50. For example, when a plurality of objects are detected by the object detecting unit 14, the detection output control unit 15 may determine an order in which pieces of information on the plurality of objects are to be output to the ECU 50 in accordance with the pieces of information on the plurality of objects.

As described above, the detection output control unit 15 can acquire the distance information, the velocity information, the angle information, and the power information of the object detected by the object detecting unit 14. Thus, the detection output control unit 15 may calculate a time taken by the object 200 that reflects the transmission wave to arrive at the mobility device 100 on the basis of information on the distance and the velocity (relative velocity) of the detected object. As described above, in the electronic device 1 according to the one embodiment, the control unit 10 (for example, the object detecting unit 14) may estimate the distance and the relative velocity between the object 200 and the mobility device 100 on the basis of the transmission signal and the reception signal. In the electronic device 1 according to the one embodiment, the control unit 10 (the detection output control unit 15) may calculate a time taken by the object 200 that reflects the transmission wave to arrive at the mobility device 100 on the basis of the estimated distance and relative velocity. Thus, the control unit 10 (the detection output control unit 15) notifies the mobility device control unit 50 of detection of the object 200 in accordance with the time taken by the object 200 that reflects the transmission wave to arrive at the mobility device 100. An operation of the detection output control unit 15 is further described later.

The ECU 50 (the mobility device control unit 50) included in the electronic device 1 according to the one embodiment is capable of controlling the functional units of the mobility device 100 and also controlling operations of the entire mobility device 100. To provide control and processing capabilities for executing various functions, the ECU 50 may include at least one processor, for example, a CPU (Central Processing Unit). The ECU 50 may be collectively implemented by one processor, may be implemented by some processors, or may be implemented by discrete individual processors. The processor may be implemented as one integrated circuit. The integrated circuit is also referred to as an IC. The processor may be implemented as a plurality of integrated circuits and discrete circuits connected to be able to perform communication. The processor may be implemented on the basis of various other known technologies. In the one embodiment, the ECU 50 may be configured as, for example, a CPU and a program executed by the CPU. The ECU 50 may appropriately include a memory required for operations of the ECU 50. At least part of the functions of the control unit 10 may be functions of the ECU 50, or at least part of the functions of the ECU 50 may be functions of the control unit 10.

In the one embodiment, the ECU (mobility device control unit) 50 may acquire a velocity (for example, a moving velocity such as a traveling velocity) of the mobility device 100. For example, the ECU 50 may acquire the velocity information of the mobility device 100 from a speedometer mounted in the mobility device 100. For example, the ECU 50 may estimate a velocity of the mobility device 100 on the basis of location information acquired from a GPS (Global Positioning System) system mounted in the mobility device 100. In addition, the ECU 50 may acquire the velocity information of the mobility device 100 with any means. The ECU 50 may supply the velocity information of the mobility device 100 thus acquired to the detection output control unit 15 and so on.

The electronic device 1 illustrated in Fig. 2 includes the two transmission antennas 25 and the four reception antennas 31. However, the electronic device 1 according to the one embodiment may include any number of transmission antennas 25 and any number of reception antennas 31. For example, by including the two transmission antennas 25 and the four reception antennas 31, the electronic device 1 can be regarded to include a virtual antenna array that is virtually constituted by eight antennas. As described above, the electronic device 1 may receive the reflected wave R of 16 subframes illustrated in Fig. 3 by using, for example, the eight virtual antennas.

An expected operation of the electronic device 1 according to the one embodiment is described next.

As described above, the electronic device 1 according to the one embodiment transmits transmission waves from the transmission antennas and receives, from the reception antennas, reflected waves that are the transmission waves reflected off an object or the like. The electronic device 1 according to the one embodiment may detect the object that reflects the transmission waves on the basis of the transmission signal and/or the reception signal.

Thus, outputting information on an object to the ECU 50 in response to the electronic device 1 detecting the object contributes to improvement of the safety of the mobility device 100 equipped with the electronic device 1. For example, by receiving the information on the object, the ECU 50 can issue a predetermined alert to an operator of the mobility device 100 or inform the operator of the information on the object through sound and/or display. By receiving the information on the object, the ECU 50 can also control the operation of the mobility device 100 to assist the operator in operating.

To improve the safety of the mobility device 100, for example, when a plurality of objects are detected, the electronic device 1 may preferentially output, to the ECU 50, information on an object presumed to be important for the operator. For example, when a plurality of objects are detected, the electronic device 1 may preferentially output, to the ECU 50, information on an object at a close distance to the mobility device 100. For example, when a plurality of objects are detected, the electronic device 1 may preferentially output, to the ECU 50, information on an object for which the signal intensity (power) of the reflected wave is high.

However, if information on an object at a close distance to the mobility device 100 is preferentially output to the ECU 50, for example, an object such as a wall located closely to the mobility device 100 may be detected and information on the wall may be output to the ECU 50. In this case, information on an object located far from the mobility device 100 may be less likely to be output to the ECU 50 (or may be output as low priority information). When information on an object for which the signal intensity of the reflected wave is high is preferentially output to the ECU 50, even if an object having a low reflectivity is detected, information on the object may be less likely to be output to the ECU 50. In this case, for example, information on an object having a low reflectivity such as a pedestrian may be less likely to be output to the ECU 50 (or may be notified as low priority information).

When a communication interface such as a CAN, for example, is employed for communication between the sensor 5 and the ECU 50 in the electronic device 1, the communication speed to the ECU 50 is often limited. Thus, when a communication interface such as a CAN is employed, communicating a large amount of information on detected objects in a short time is often difficult.

To cope with such a circumstance, the electronic device 1 according to the one embodiment outputs information to the ECU 50 preferentially from information on an object having a high risk of collision with the mobility device 100. An operation of the electronic device 1 according to the one embodiment is described more specifically below.

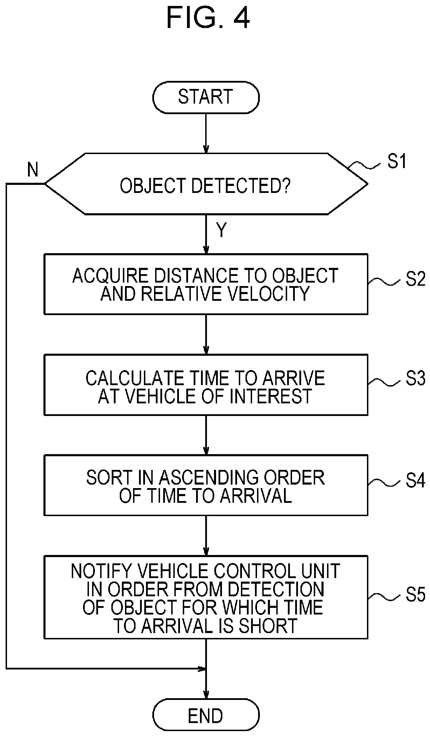

Fig. 4 is a flowchart for describing an example of the operation of the electronic device 1 according to the one embodiment. It is assumed that at the start of the operation illustrated in Fig. 4, the electronic device 1 has performed the operation before part performed by the object detecting unit 14 of the control unit 10 illustrated in Fig. 2. That is, it is assumed that at the start of the operation illustrated in Fig. 4, the electronic device 1 has transmitted a transmission wave from the transmission unit 20 and has received, with each of the reception units 30, a reflected wave that is the reflected transmission wave. It is further assumed that at the start of the operation illustrated in Fig. 4, the control unit 10 has started signal processing based on the transmission signal and the reception signal. More specifically, it may be assumed that in the control unit 10, the distance FFT processing unit 11 has performed the distance FFT processing on the beat signals, the velocity FFT processing unit 12 has performed the velocity FFT processing on the results of the distance FFT processing, and the angle-of-arrival estimating unit 13 has estimated an angle of arrival based on the results of the velocity FFT processing. At this time point, the operation illustrated in Fig. 4 starts.

In response to the start of the operation illustrated in Fig. 4, the object detecting unit 14 determines whether an object that reflects the transmission wave is detected on the basis of the transmission signal and the reception signal (step S1). As described above, in step S1, the object detecting unit 14 may detect an object on the basis of the information supplied from at least any of the distance FFT processing unit 11, the velocity FFT processing unit 12, and the angle-of-arrival estimating unit 13. If it is not determined in step S1 that an object is detected, the control unit 10 ends the operation illustrated in Fig. 4.

If it is determined in step S1 that an object is detected, the detection output control unit 15 acquires a distance and a relative velocity to the detected object (step S2). The "distance to the detected object" acquired in step S2 may be, for example, a distance between the mobility device 100 equipped with the electronic device 1 and the detected object 200. The "relative velocity (to the detected object)" acquired in step S2 may be, for example, a relative velocity between the mobility device 100 equipped with the electronic device 1 and the detected object 200. As described above, the distance information, the velocity information, the angle information, and the power information of the object detected by the object detecting unit 14 may be supplied to the detection output control unit 15. Thus, the detection output control unit 15 may acquire the information from the object detecting unit 14 in step S2. In step S2, the detection output control unit 15 may acquire the information from at least any of the distance FFT processing unit 11, the velocity FFT processing unit 12, and the angle-of-arrival estimating unit 13. In step S2, the detection output control unit 15 may acquire the information temporarily stored in the storage unit 40.

After the information on the distance and the relative velocity is acquired in step S2, the detection output control unit 15 estimates (calculates) a time taken by the detected object to arrive at the mobility device 100 that is a vehicle of interest (step S3). For example, in step S3, the detection output control unit 15 may calculate the time by dividing the distance by the relative velocity. If a plurality of objects are detected in step S1, the detection output control unit 15 estimates (calculates) the time taken by each of the plurality of objects to arrive at the mobility device 100 in step S3. Hereinafter, the time calculated (estimated) in step S3 is also simply referred to as a "time to arrival". This time to arrival can be assumed as a time to collision of the detected object with the mobility device 100 equipped with the electronic device 1. When P denotes the latitude and the longitude of the mobility device 100 or X denotes a coordinate position of the mobility device 100, this time to arrival may be a time taken by the detected object to arrive at the same latitude and longitude P or the same coordinate position X as that of the mobility device 100 equipped with the electronic device 1. The coordinate position X may be any of a one-dimensional coordinate, two-dimensional coordinates, and three-dimensional coordinates.

After the time to arrival is calculated in step S3, the detection output control unit 15 sorts the plurality of detected objects in ascending order of time to arrival (step S4). In step S4, the detection output control unit 15 may sort the plurality of detected objects in ascending order of the time to arrival calculated for each of the plurality of objects.

After the plurality of objects are sorted in step S4, the detection output control unit 15 notifies the ECU 50 of the plurality of objects from the object for which the calculated time to arrival is short (step S5). In step S5, the detection output control unit 15 may output, to the ECU 50, pieces of information on the detected objects from information on the object for which the calculated time to arrival is short among the plurality of objects.

As described above, in the electronic device 1 according to the one embodiment, the control unit 10 (the detection output control unit 15) estimates a time taken by the object 200 that reflects the transmission wave to arrive at the mobility device 100 on the basis of the transmission signal and the reception signal. In the electronic device 1 according to the one embodiment, the control unit 10 (the detection output control unit 15) notifies the ECU 50 of detection of the object 200 in accordance with the time taken by the object 200 that reflects the transmission wave to arrive at the mobility device 100. Specifically, the control unit 10 (the detection output control unit 15) may notify the ECU 50 of detection of the objects 200 from the object 200 for which the time taken by the object 200 that reflects the transmission wave to arrive at the mobility device 100 is short. For example, the control unit 10 (the detection output control unit 15) may notify the ECU 50 of detection of the objects 200 preferentially from the object 200 for which the time taken by the object 200 that reflects the transmission wave to arrive at the mobility device 100 is short. That is, preferential notifying may include a meaning of notifying first in order.

The operation illustrated in Fig. 4 may be performed repeatedly, for example, at predetermined timings or not-regularly. In the one embodiment, the detection output control unit 15 may notify the ECU 50 of detection of the objects preferentially from the object for which the time to arrival is short in each frame of the transmission signal, for example. In this manner, the detection output control unit 15 can calculate times to collision for objects on the basis of the distances and the relative velocities of the objects and can output information to the ECU 50 from information on the object for which the time to collision is short in a frame of the transmission signal. Thus, the ECU 50 can preferentially process information from information on the object having a high risk of collision with the mobility device 100. Thus, for example, the ECU 50 can issue a predetermined alert to the operator of the mobility device 100 or can inform the operator of the information on the object through sound and/or display, preferentially from the object having the high risk of collision. The ECU 50 can also control the operation of the mobility device 100 for preferentially from the object having the high risk of collision to assist the operator in operating.

The electronic device 1 according to the one embodiment determines the priority of outputting information (such as a message) on an object which the ECU 50 is to be notified of. The electronic device 1 according to the one embodiment notifies the ECU 50 of information preferentially from information on an object having a high risk of collision with the mobility device 100. Thus, the electronic device 1 according to the one embodiment can recognize the objects and notify the ECU 50 of the information preferentially from the object having the high risk of collision. Therefore, the electronic device 1 according to the one embodiment can improve the safety of the mobility device. The electronic device 1 according to the one embodiment detects objects and notifies the ECU 50 of the information preferentially from the object having the high risk of collision. Thus, even if a communication interface with a limited communication speed such as a CAN, for example, is used in communication with the ECU 50, the electronic device 1 according to the one embodiment can detect objects and output the information to the ECU 50 preferentially from the information on the object having the high risk of collision with the mobility device 100.

### (Another Embodiment 1)

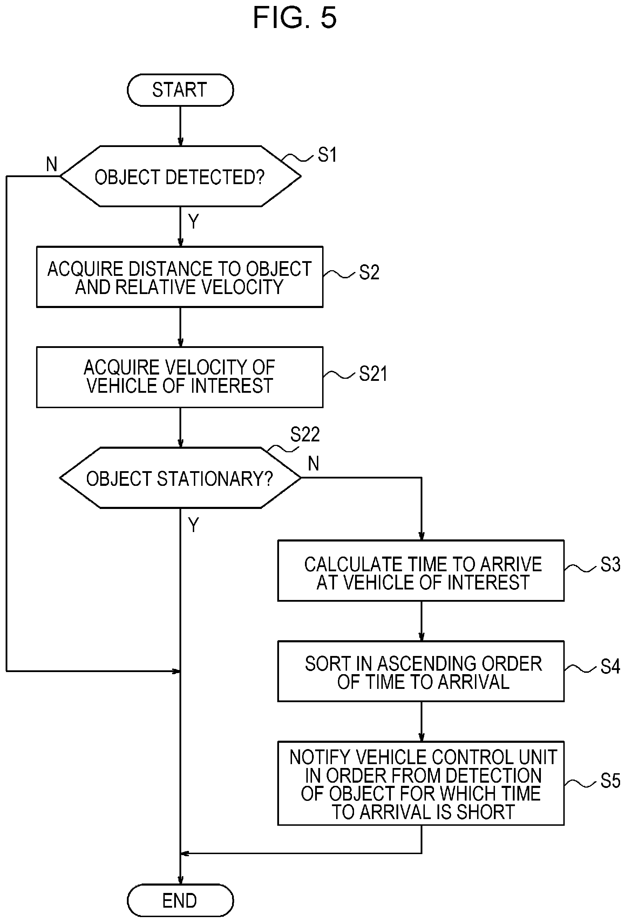

Fig. 5 is a flowchart for describing another example of the operation of the electronic device 1 according to the one embodiment. The operation illustrated in Fig. 5 is the operation illustrated in Fig. 4 that is partially changed. Therefore, description that is the same as or similar to the description already given in Fig. 4 is appropriately simplified or omitted below.

In the operation illustrated in Fig. 5, the electronic device 1 according to the one embodiment acquires a traveling velocity of the vehicle of interest, determines whether an object is a stationary object from a relative velocity to the object, and does not make a notification to the ECU 50 (or lowers the priority of the notification) if the object is a stationary object.

The start of the operation illustrated in Fig. 5 is also the same as and/or similar to that of the operation described in Fig. 4. The operation illustrated in Fig. 5 additionally includes steps S21 and S22 between steps S2 and S3 of the operation illustrated in Fig. 4.

In the operation illustrated in Fig. 5, after information on the distance and the relative velocity is acquired in step S2, the detection output control unit 15 acquires a traveling velocity of the mobility device 100 that is the vehicle of interest, for example (step S21). In step S21, the detection output control unit 15 may acquire the traveling velocity of the mobility device 100 from the ECU 50, for example. As described above, the ECU 50 may acquire the velocity (for example, a moving velocity such as a traveling velocity) of the mobility device 100.

After the velocity of the vehicle of interest is acquired in step S21, the detection output control unit 15 determines whether the detected object is stationary (step S22). Herein, "an object being stationary" means an object being stationary with respect to a road surface or the like on which the mobility device 100 is traveling. That is, "an object being stationary" means that the object is not moving on a road surface on which the mobility device 100 is traveling. For example, it is assumed that when the detected object is moving away from the mobility device 100 at a relative velocity of 50 km/h, the traveling velocity of the mobility device 100 is 50 km/h. In this case, in step S22, the detection output control unit 15 can determine that the object is stationary.

If the object is stationary in step S22, the control unit 10 ends the operation illustrated in Fig. 5. On the other hand, if the object is not stationary in step S22, the control unit 10 performs the operation of step S3 and subsequent steps. That is, in the operation illustrated in Fig. 5, if a non-stationary object is detected, a notification is made to the ECU 50 in consideration of the priority as described above. On the other hand, in the operation illustrated in Fig. 5, even if a stationary object is detected, a notification is not made to the ECU 50. In this case, if a stationary object is detected, the priority of notifying the ECU 50 may be set low.

As described above, in the electronic device 1 according to the one embodiment, the control unit 10 (for example, the velocity FFT processing unit 12) may estimate the relative velocity between the object 200 and the mobility device 100 on the basis of the transmission signal and the reception signal. In the electronic device 1 according to the one embodiment, the control unit 10 (the detection output control unit 15) may determine whether the object 200 is stationary on the basis of the relative velocity between the object 200 and the mobility device 100 and the velocity of the mobility device 100. In the electronic device 1 according to the one embodiment, the control unit 10 (the detection output control unit 15) need not notify the ECU 50 of detection of the 200 when the object 200 is determined to be stationary.

The electronic device 1 according to the one embodiment notifies the ECU 50 of information preferentially from information on a moving object having a high risk of collision with the mobility device 100. Thus, the electronic device 1 according to the one embodiment can recognize the objects and notify the ECU 50 of the information preferentially from the object having the high risk of collision. Therefore, the electronic device 1 according to the one embodiment can improve the safety of the mobility device.

### (Another Embodiment 2)

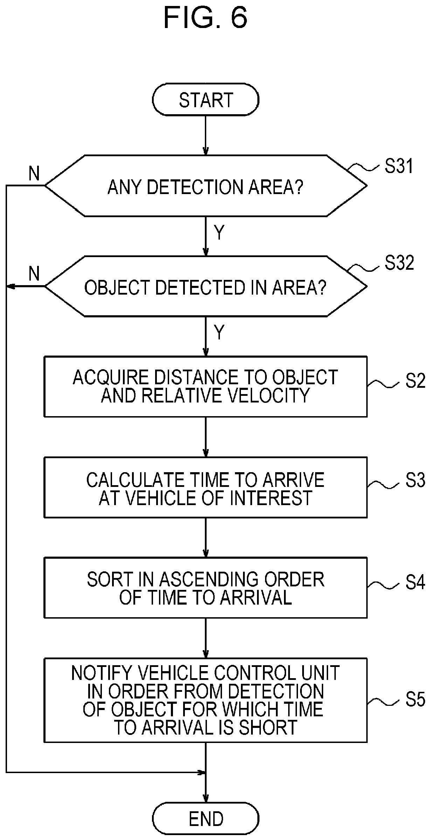

Fig. 6 is a flowchart for describing another example of the operation of the electronic device 1 according to the one embodiment. Similarly to the operation illustrated in Fig. 5, the operation illustrated in Fig. 6 is the operation illustrated in Fig. 4 that is partially changed. Therefore, description that is the same as or similar to the description already given in Fig. 4 or 5 is appropriately simplified or omitted below.

In the operation illustrated in Fig. 6, when a detection area to which a transmission wave is to be transmitted is set, the electronic device 1 according to the one embodiment notifies the ECU 50 of objects detected in the detection area from the object for which the time to arrival is short.

The start of the operation illustrated in Fig. 6 is also the same as and/or similar to that of the operation described in Fig. 4. In the operation illustrated in Fig. 6, the operation of steps S31 and S32 is performed instead of step S1 of the operation illustrated in Fig. 4.

In response to the start of the operation illustrated in Fig. 6, the control unit 10 determines whether a detection area for detecting an object by transmitting the transmission waves from the transmission antennas 25 is set (step S31). If the detection area is not set in step S31, the control unit 10 ends the operation illustrated in Fig. 6. As the detection area in the present disclosure, for example, an appropriate area such as an area of a predetermined range in front of the mobility device 100, an area of a lane in which the mobility device 100 is traveling, an area other than the lane in which the mobility device 100 is traveling, an area of a predetermined range behind the mobility device 100, an area of a predetermined angle range in lateral directions of the mobility device 100, and any combination of these can be used.

On the other hand, if the detection area is set in step S31, the object detecting unit 14 determines whether an object that reflects the transmission wave is detected in the area (step S32). In step S32, the object detecting unit 14 may detect an object on the basis of the information supplied from at least any of the distance FFT processing unit 11, the velocity FFT processing unit 12, and the angle-of-arrival estimating unit 13 as described above.

If it is not determined in step S32 that an object is detected in the detection area, the control unit 10 ends the operation illustrated in Fig. 6. On the other hand, if it is determined in step S32 that an object is detected in the detection area, the control unit 10 performs the operation of step S2 and subsequent steps. That is, in the operation illustrated in Fig. 6, in response to detection of an object in the area set so that an object is to be detected by using the transmission wave, a notification is made to the ECU 50 in consideration of the priority as described above.

As described above, in the electronic device 1 according to the one embodiment, when the object 200 is detected in the range for detection performed based on the transmission wave, the control unit 10 (the detection output control unit 15) may be notify the ECU 50 of detection of the object 200.

The electronic device 1 according to the one embodiment notifies the ECU 50 of information preferentially from information on an object having a high risk of collision with the mobility device 100. Thus, the electronic device 1 according to the one embodiment can recognize the objects and notify the ECU 50 of the information preferentially from the object having the high risk of collision. Therefore, the electronic device 1 according to the one embodiment can improve the safety of the mobility device. In addition, the electronic device 1 according to the one embodiment notifies the ECU 50 of only objects detected in the area set so that objects are to be detected by using the transmission wave, in consideration of the priority as described above. Thus, an amount of information communicated from the control unit 10 to the ECU 50 can be reduced.

While the present disclosure has been described on the basis of the various drawings and the embodiments, it should be noted that a person skilled in the art can easily make various variations or corrections on the basis of the present disclosure. Therefore, it should be noted that these variations or corrections are within the scope of the present disclosure. For example, functions and the like included in each functional unit can be rearranged without any logical contradiction. A plurality of functional units or the like may be combined into one or may be divided. The embodiments according to the present disclosure described above are not limited to strict implementation according to the respective embodiments described above, and may be implemented by appropriately combining the features or omitting part thereof. That is, a person skilled in the art can make various variations and corrections to the contents of the present disclosure on the basis of the present disclosure. Accordingly, these variations and corrections are within the scope of the present disclosure. For example, in each embodiment, each functional unit, each means, each step, or the like can be added to another embodiment or replaced with each functional unit, each means, each step, or the like in another embodiment without any logical contradiction. In each embodiment, a plurality of functional units, means, steps, or the like may be combined into one or may be divided. The embodiments according to the present disclosure described above are not limited to strict implementation according to the respective embodiments described above, and may be implemented by appropriately combining the features or omitting part thereof.

For example, in the embodiments described above, the description has been given of the configuration in which the object detection ranges are dynamically switched between by using the one sensor 5. However, in one embodiment, detection of an object may be performed in the determined object detection ranges by using the plurality of sensors 5. In one embodiment, beamforming may be performed toward the determined object detection ranges by using the plurality of sensors 5.

The embodiments described above are not limited to implementation as the electronic device 1. For example, the embodiments described above may be implemented as a method for controlling a device such as the electronic device 1. For example, the embodiments described above may be implemented as a program executed by a device such as the electronic device 1.

The electronic device 1 according to one embodiment may include, as the minimum configuration, at least part of at least one of the sensor 5 or the control unit 10, for example. On the other hand, the electronic device 1 according to one embodiment may appropriately include at least any of the signal generating unit 21, the synthesizer 22, the phase control units 23, the amplifiers 24, and the transmission antennas 25 as illustrated in Fig. 2 in addition to the control unit 10. The electronic device 1 according to the one embodiment may appropriately include at least any of the reception antennas 31, the LNAs 32, the mixers 33, the IF units 34, and the AD conversion units 35 instead of or along with the functional units described above. The electronic device 1 according to the one embodiment may include the storage unit 40. As described above, the electronic device 1 according to the one embodiment can employ various configurations. When the electronic device 1 according to the one embodiment is mounted in the mobility device 100, for example, at least any of the functional units described above may be installed at an appropriate place such as the inside of the mobility device 100. On the other hand, in one embodiment, for example, at least any of the transmission antennas 25 and the reception antennas 31 may be installed outside the mobility device 100.

### Reference Signs List

- 1: electronic device
- 5: sensor
- 10: control unit
- 11: distance FFT processing unit
- 12: velocity FFT processing unit
- 13: angle-of-arrival estimating unit
- 14: object detecting unit
- 15: detection output control unit
- 20: transmission unit
- 21: signal generating unit
- 22: synthesizer
- 23: phase control unit
- 24: amplifier
- 25: transmission antenna
- 30: reception unit
- 31: reception antenna
- 32: LNA
- 33: mixer
- 34: IF unit
- 35: AD conversion unit
- 40: storage unit
- 50: ECU
- 100: mobility device (mobility device control unit)
- 200: object

## Claims

1. An electronic device to be mounted in a mobility device, comprising:
a transmission antenna that transmits a transmission wave;
a reception antenna that receives a reflected wave that is the transmission wave having been reflected; and
a control unit that detects an object that reflects the transmission wave, based on a transmission signal transmitted as the transmission wave and a reception signal received as the reflected wave, wherein
the control unit estimates a time taken by the object to arrive at the mobility device, based on the transmission signal and the reception signal, and notifies a mobility device control unit that controls the mobility device of detection of the object in accordance with the time.

2. The electronic device according to Claim 1, wherein the control unit notifies the mobility device control unit of detection of the objects from an object for which the time is short.

3. The electronic device according to Claim 1 or 2, wherein the control unit estimates a distance and a relative velocity between the object and the mobility device, based on the transmission signal and the reception signal, and calculates the time, based on the distance and the relative velocity.

4. The electronic device according to any of Claims 1 to 3, wherein the control unit estimates a relative velocity between the object and the mobility device, based on the transmission signal and the reception signal, and determines whether the object is stationary, based on the relative velocity and a velocity of the mobility device.

5. The electronic device according to Claim 4, wherein the control unit does not notify the mobility device control unit of detection of the object when it is determined that the object is stationary.

6. The electronic device according to any of Claims 1 to 5, wherein the control unit notifies the mobility device control unit of detection of the object when the object is detected in a range for detection performed based on the transmission wave.

7. A method for controlling an electronic device to be mounted in a mobility device, the method comprising:
a step of transmitting a transmission wave from a transmission antenna;
a step of receiving, from a reception antenna, a reflected wave that is the transmission wave having been reflected;
a step of detecting an object that reflects the transmission wave, based on a transmission signal transmitted as the transmission wave and a reception signal received as the reflected wave;
a step of estimating a time taken by the object to arrive at the mobility device, based on the transmission signal and the reception signal; and
a step of notifying a mobility device control unit that controls the mobility device of detection of the object in accordance with the time.

8. A program for causing an electronic device to be mounted in a mobility device to perform:
a step of transmitting a transmission wave from a transmission antenna;
a step of receiving, from a reception antenna, a reflected wave that is the transmission wave having been reflected;
a step of detecting an object that reflects the transmission wave, based on a transmission signal transmitted as the transmission wave and a reception signal received as the reflected wave;
a step of estimating a time taken by the object to arrive at the mobility device, based on the transmission signal and the reception signal; and
a step of notifying a mobility device control unit that controls the mobility device of detection of the object in accordance with the time.
